# EUROPEAN PATENT APPLICATION

(11) **EP 3 222 884 A1**
(43) Date of publication of application: **27.09.2017**
(21) Application number: 15861802.5
(22) Date of filing: 20.11.2015
(51) Int. Cl.: F16H 55/14, F16H 25/20, F16H 25/22

(54) **GEAR AND ELECTRIC ACTUATOR PROVIDED WITH SAME**

(30) Priority: 21.11.2014 JP 2014236133
(71) Applicant: NTN Corporation, Osaka-shi, Osaka 550-0003 (JP)
(72) Inventor: IKEDA, Yoshinori, Iwata-shi Shizuoka 438-8510 (JP); MIKURIYA, Isao, Iwata-shi Shizuoka 438-8510 (JP); KAWAGUCHI, Hayato, Iwata-shi Shizuoka 438-8510 (JP)
(74) Representative: Cohausz & Florack
(86) International application number: PCT/JP2015/082673
(87) International publication number: WO 2016/080513

(57) **Abstract**

According to the present invention, there is provided a gear comprising teeth formed on the outer circumference of the gear and a central hole formed at the center of the gear; an intermediate region between a peripheral portion near the teeth and a boss near the central hole formed to have a thickness thinner than those of the peripheral portion and the boss; a plurality of weight-lightening apertures formed circumferentially and equidistantly in the intermediate region; and a vibration absorbing member of synthetic rubber formed on both side surfaces of the intermediate region integrally each other through the weight-lightening apertures, the vibration absorbing member is attached to the radially outer side than an outer diameter of a bearing to be arranged adjacent to the vibration absorbing member. According to the present invention, there is also provided an electric actuator comprising an electric motor mounted on a housing; a speed reduction mechanism for transmitting rotational force of the motor to a ball screw mechanism; and the ball screw mechanism being able to convert the rotational motion of the electric motor to the axial linear motion of a driving shaft and comprising a nut and a screw shaft; the nut being formed with a helical screw groove on its inner circumference, securing on its outer circumference an output gear forming part of the speed reduction mechanism and the screw shaft being formed on its outer circumference with a helical screw groove corresponding to the helical screw groove of the nut, adapted to be inserted into the nut via a large number of balls, and supported not rotationally but axially movably relative to the housing characterized in that the output gear is secured on the outer circumference of the nut with being sandwiched by an inner ring of one supporting bearing and a flange portion of the nut, and that the output gear is configured by a gear defined in any one of claims 1 to 5.

## Description

### Field of the Invention

The present invention relates to a gear improved in suppression of abnormal noise generation and an electric actuator having said gear provided with a ball screw mechanism generally used in motors in general industries and driving sections of automobiles etc. More particularly, the present invention relates to an electric actuator used in transmissions or parking brakes of automobiles to convert a rotary motion from an electric motor to a linear motion of a driving shaft via the ball screw mechanism.

### Description of Background Art

It has been generally used gear mechanisms such as a trapezoidal thread worm gear mechanism or a rack and pinion gear mechanism as mechanisms for converting the rotary motion of electric motor to axial linear motion in electric linear actuators used in various kinds of driving sections. These motion converting mechanisms involve sliding contact portions and thus power loss is increased and simultaneously size of electric motor and power consumption are also increased. Thus, the ball screw mechanisms have been widely used as more efficient actuators of low frictional loss.

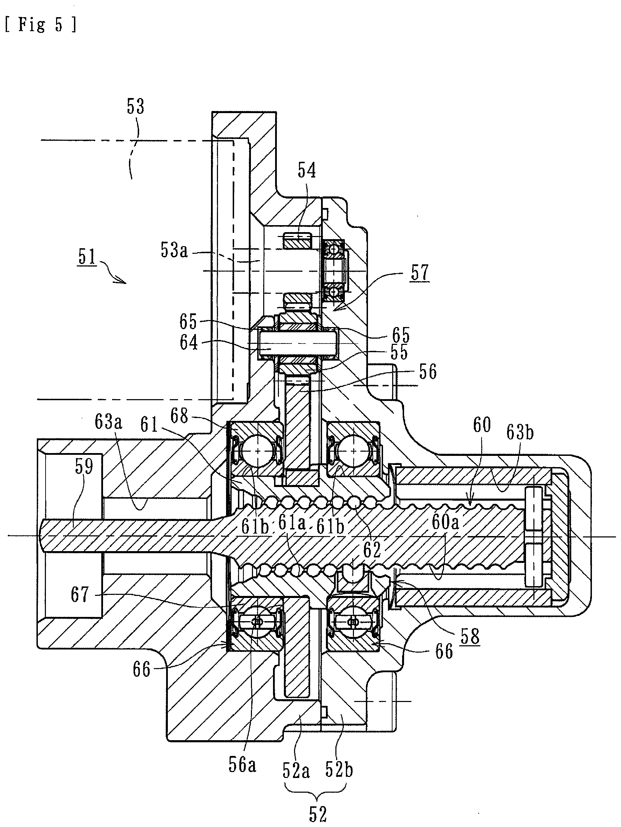

It has been known a structure e.g. shown in Fig. 5 as an electric actuator using the ball screw mechanism. The electric actuator 51 comprises a housing 52 including a first housing 52a and a second housing 52b, an electric motor 53 mounted on the housing 52, a speed reduction mechanism 57 for transmitting the rotational power of the electric motor 53 to a ball screw mechanism 58 via a motor shaft 53a, the ball screw mechanism 58 being constituted to convert the rotational motion of the electric motor 53 to the axial linear motion of a driving shaft 59 via the speed reduction mechanism 57. The ball screw mechanism 58 comprises a nut 61 formed with a helical screw groove 61a on its inner circumference and supported rotationally and axially immovably via a pair of supporting bearings 66 mounted on the housing 52, and a screw shaft 60 coaxially integrated with the driving shaft 59 and formed with a helical screw groove 60a on its outer circumference corresponding to the helical screw groove 61a of the nut 61 and inserted into the nut 61 via a plurality of balls 62 and supported not rotationally but axially movably.

The electric motor 53 is mounted on the first housing 52a and a bore 63a and a blind bore 63b are formed respectively in the first and second housings 52a, 52b for containing the screw shaft 60. The speed reduction mechanism 57 comprises an input gear 54 secured on the motor shaft 53a, an intermediate gear 55 mating with the input gear 54 and an output gear 56 secured on the nut 61 and mating with the intermediate gear 55.

A gear shaft 64 is supported on the first and second housings 52a, 52b and bushes 65 of synthetic resin are interposed either one or both of space between the gear shaft 64 and intermediate gear 55 or between the first and second housings 52a, 52b and the gear shaft 64 and thus the intermediate gear 55 can be rotationally supported relative to the housing 52. Accordingly it is possible to provide an electric actuator 51 which can interrupt or reduce transmission of vibration caused by a play between the intermediate gear 55 and the gear shaft 64 as well as by a play of gear shaft 64 itself.

In the electric actuator 51 of the prior art, the rotational power of the electric motor 53 is transmitted to the nut 61 of the ball screw mechanism 58 via the speed reduction mechanism 57 comprising the input gear 54, the intermediate gear 55 and the output gear 56. The nut 61 is rotationally supported by a pair of the supporting bearings 66 comprising deep groove ball bearings. The output gear 56 is arranged between two supporting bearings 66 and secured on the nut 61 with being contacted with one of the supporting bearings 66.

The inner rings 67 of the bearings 66 are secured on the outer circumference 61b of the nut 61 and thus rotated together with the nut 61. On the other hand, the outer rings 68 of the bearings 66 cannot rotate since they are securely fitted in the housing 52. Accordingly, smooth rotation of the output gear 56 would be impaired if the side surface of the output gear 56 contacts the end face of the outer ring 68 of the bearing 66. Thus, the output gear 56 is formed so that its axial thickness is smaller than its boss 56a contacting the inner ring 67 of the bearing 66 to prevent contact of the output gear 56 against the outer ring 68 of the bearing 66 and reduce the weight of the output gear 56 (see e.g. Patent Document 1 below).

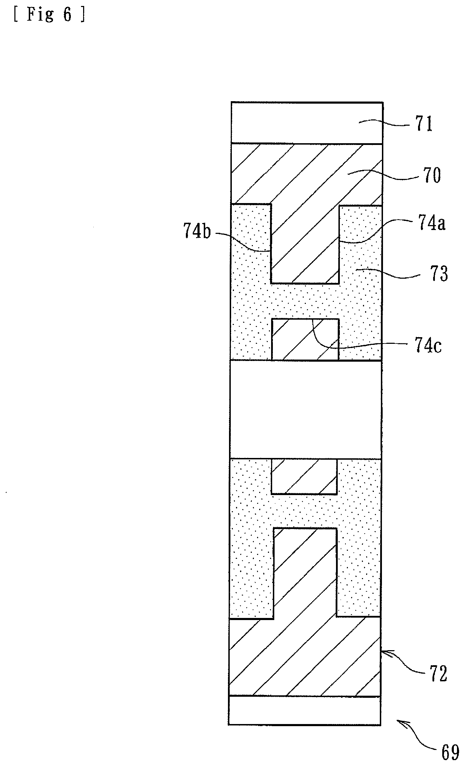

In the electric actuator 51 of the prior art, there would be sometimes caused offensive abnormal noises of tooth hitting sounds by backlash between the input gear 54, intermediate gear 55 and output gear 56 of the speed reduction mechanism 57. The tooth hitting sounds will be transmitted to other mechanical parts of the ball screw mechanism 58 for example via the gear body of the output gear 56 and would finally cause resonance on whole apparatus. In order to prevent generation of the abnormal noise, there has been known a low noise gear 69 shown in Fig. 6 as a vibration absorbing gear. The low noise gear 69 comprises a metallic gear 72 including a body portion 70 and a tooth portion 71 formed on an outer circumference of the body portion 70, and a vibration absorbing member 73 formed on the body portion 70 of the metallic gear 72 by insert molding.

Recessed portions 74a, 74b are formed on both sides of the body portion 70 and a communication portion 74c having a cross-section area smaller than that of the recessed portion 74a or 74b is formed between the recessed portions 74a, 74b for communicating them each other. A vibration absorbing member 73 is formed to fill the recessed portions 74a, 74b and the communication portion 74c in a manner so that it cannot be separated from the body portion 70. The vibration absorbing member 73 is formed of synthetic rubber having e.g. anti-heat and anti-oil properties superior in damping effect (see e.g. Patent Document 2).

### Documents of the Prior Art

### Patent Documents

Patent Document 1: JP 2013 -148108 A
Patent Document 2: JP 09 -177943 A

### Disclosure of the Invention

### Problems to be solved by the Invention

In the low noise gear 69 of the prior art shown in Fig. 6, it is possible to damp vibrations generated in the tooth portion 71 and also to prevent the vibration absorbing member 73 from being separated from the body portion 70 of the metallic gear 72. However, since the vibration absorbing member 73 formed of elastic member is arranged between the body portion 70 and the boss portion which are separated each other, rotational rigidity of the vibration absorbing member 73 is small to transmit a large torque and thus exact rotational amount of the electric motor 53 cannot be converted as exact linear motion of the driving shaft 59 due to elastic deformation of the vibration absorbing member 73.

In addition, when such a low noise gear 69 is applied to the output gear 56 shown in Fig. 5 arranged adjacent to the supporting bearing 66, the vibration absorbing member 73 tends to be contacted with the outer ring 68 of the supporting bearing 66 and accordingly smooth rotation of the output gear 56 is impaired and thus it is difficult to be successful at both the vibration absorption and the weight-lightening.

It is, therefore, an object of the present invention to provide a gear which comprises vibration absorbing member of vulcanized rubber in a plurality of weight-lightening apertures to prevent dropout the vibration absorbing member from the gear and is designed to prevent the vibration absorbing member from being contacted with an outer ring of a supporting bearing and thus to achieve both reduction of abnormal noise by damping vibration of teeth of the gear and smooth rotation of the gear as well as to provide an electric actuator using such a gear.

### Means for solving the Problems

For achieving the object of the present invention, there is provided according to the present invention of claim 1, a gear comprising teeth formed on the outer circumference of the gear and a central hole formed at the center of the gear; an intermediate region between a peripheral portion near the teeth and a boss near the central hole formed to have a thickness thinner than those of the peripheral portion and the boss; a plurality of weight-lightening apertures formed circumferentially and equidistantly in the intermediate region; and a vibration absorbing member of synthetic rubber formed on both side surfaces of the intermediate region integrally each other through the weight-lightening apertures, the vibration absorbing member is attached to the radially outer side than the outer diameter of a bearing to be arranged adjacent to the vibration absorbing member.

According to the gear of the present invention of claim1, since it comprises teeth formed on the outer circumference of the gear and a central hole formed at the center of the gear; an intermediate region between a peripheral portion near the teeth and a boss near the central hole formed to have a thickness thinner than those of the peripheral portion and the boss; a plurality of weight-lightening apertures formed circumferentially and equidistantly in the intermediate region; and a vibration absorbing member of synthetic rubber formed on both side surfaces of the intermediate region integrally each other through the weight-lightening apertures, the vibration absorbing member is attached to the radially outer side than the outer diameter of a bearing to be arranged adjacent to the vibration absorbing member, it is possible to improve the reliability with preventing peeling-off or dropout of the vibration absorbing member and to suppress generation of abnormal noise such as tooth hitting sound with reducing vibration of teeth and simultaneously reducing the weight of the gear and thus to ensure smooth rotation of the gear with preventing contact of the gear with the outer ring of the bearing.

It is preferable as defined in claim 2 that the weight-lightening apertures are arranged at a position near the outer circumference of the intermediate region. This makes it possible to reduce the rotational inertia and also to improve the strength and durability of the gear.

It is preferable as defined in claim 3 that each weight-lightening aperture has a configuration of rectangle or triangle expanding radially outward. This makes it possible to reduce the weight of the gear with increasing the weight-lightening aperture.

It is also preferable as defined in claim 4 that the side surfaces of the vibration absorbing member are configured so that they are flush with those of the peripheral portion and the boss. This makes it possible to easily form the vibration absorbing member and thus to surely obtain desired accuracy of its dimensions.

It is also preferable as defined in claim 5 that the gear is formed of sintered alloy. This makes it possible to exactly form the gear of desired configuration and dimensions although the gear has a complicated configuration requiring high machining accuracy.

There is also provided according to the present invention of claim 6, an electric actuator comprising a housing; an electric motor mounted on the housing; a speed reduction mechanism for transmitting rotational force of the motor to a ball screw mechanism via a motor shaft; and the ball screw mechanism being able to convert the rotational motion of the electric motor to the axial linear motion of a driving shaft via the speed reduction mechanism and comprising a nut and a screw shaft; the nut being formed with a helical screw groove on its inner circumference, securing on its outer circumference an output gear forming part of the speed reduction mechanism and supported rotationally but axially immovably relative to the housing by a pair of supporting bearings mounted on the housing, and the screw shaft being formed on its outer circumference with a helical screw groove corresponding to the helical screw groove of the nut, adapted to be inserted into the nut via a large number of balls, and supported not rotationally but axially movably relative to the housing characterized in that the output gear is secured on the outer circumference of the nut with being sandwiched by an inner ring of one supporting bearing and a flange portion of the nut, and that the output gear is configured by a gear defined in any one of claims 1 to 5.

According to the electric actuator of the present invention of claim 6, since it comprises a speed reduction mechanism for transmitting rotational force of an electric motor to a ball screw mechanism; the ball screw mechanism being able to convert the rotational motion of the electric motor to the axial linear motion of a driving shaft via the speed reduction mechanism and comprising a nut and a screw shaft; the nut being formed with a helical screw groove on its inner circumference, securing on its outer circumference an output gear forming part of the speed reduction mechanism and supported rotationally but axially immovably relative to the housing by a pair of supporting bearings mounted on the housing, and the screw shaft being formed on its outer circumference with a helical screw groove corresponding to the helical screw groove of the nut, adapted to be inserted into the nut via a large number of balls, and supported not rotationally but axially movably relative to the housing and is characterized in that the output gear is configured by a gear defined in any one of claims 1 to 5 and secured on the outer circumference of the nut with being sandwiched by an inner ring of one supporting bearing and a flange portion of the nut, it is possible to provide an electric actuator which can assure smooth rotation of the output gear with preventing the output gear from contacting the outer ring of the bearing and suppress generation of abnormal noise with damping vibration of teeth of the gear which would be caused during meshing of the output gear.

### Effects of the Invention

According to the gear of the present invention, since it comprises teeth formed on the outer circumference of the gear and a central hole formed at the center of the gear; an intermediate region between a peripheral portion near the teeth and a boss near the central hole formed to have a thickness thinner than those of the peripheral portion and the boss; a plurality of weight-lightening apertures formed circumferentially and equidistantly in the intermediate region; and a vibration absorbing member of synthetic rubber formed on both side surfaces of the intermediate region integrally each other through the weight-lightening apertures, the vibration absorbing member is attached to the radially outer side than the outer diameter of a bearing to be arranged adjacent to the vibration absorbing member, it is possible to improve the reliability with preventing peeling-off or dropout of the vibration absorbing member and to suppress generation of abnormal noise such as tooth hitting sound with reducing vibration of teeth and simultaneously reducing the weight of the gear and thus to ensure smooth rotation of the gear with preventing contact of the gear with the outer ring of the bearing.

In addition, according to the electric actuator of the present invention, since it comprises a housing; an electric motor mounted on the housing; a speed reduction mechanism for transmitting rotational force of the motor to a ball screw mechanism via a motor shaft; and the ball screw mechanism being able to convert the rotational motion of the electric motor to the axial linear motion of a driving shaft via the speed reduction mechanism and comprising a nut and a screw shaft; the nut being formed with a helical screw groove on its inner circumference, securing on its outer circumference an output gear forming part of the speed reduction mechanism and supported rotationally but axially immovably relative to the housing by a pair of supporting bearings mounted on the housing, and the screw shaft being formed on its outer circumference with a helical screw groove corresponding to the helical screw groove of the nut, adapted to be inserted into the nut via a large number of balls, and supported not rotationally but axially movably relative to the housing and is characterized in that the output gear is configured by a gear defined in any one of claims 1 to 5 and secured on the outer circumference of the nut with being sandwiched by an inner ring of one supporting bearing and a flange portion of the nut, it is possible to provide an electric actuator which can assure smooth rotation of the output gear with preventing the output gear from contacting the outer ring of the bearing and suppress generation of abnormal noise with damping vibration of teeth of the gear which would be caused during meshing of the output gear.

### Brief description of the Drawings

[Fig. 1] A longitudinal section view showing one preferable embodiment of an electric actuator of the present invention;
[Fig. 2] An enlarged longitudinal section view showing the ball screw mechanism of Fig. 1;
[Fig. 3(a)] A perspective view showing a configuration of weight-lightening apertures of an output gear of the present invention;
[Fig. 3(b)] A perspective view showing a comparative example of the configuration of weight-lightening apertures of an output gear of the present invention;
[Fig. 3(c)] A perspective view showing another comparative example of the configuration of weight-lightening apertures of an output gear of the present invention;
[Fig. 4(a)] An explanatory view showing a relative arrangement between an output gear and its supporting bearing;
[Fig. 4(b)] A perspective view showing a mounted state between an output gear and its supporting bearing;
[Fig. 5] A longitudinal section view showing an electric actuator of the prior art; and
[Fig. 6] A schematic longitudinal section view showing an output gear of the electric actuator of the prior art.

### Mode for carrying out the Invention

One mode for carrying out the present invention is an an electric actuator comprising a housing of aluminum alloy; an electric motor mounted on the housing; a speed reduction mechanism for transmitting rotational force of the motor to a ball screw mechanism via a motor shaft; and the ball screw mechanism being able to convert the rotational motion of the electric motor to the axial linear motion of a driving shaft via the speed reduction mechanism and comprising a nut and a screw shaft; the nut being formed with a helical screw groove on its inner circumference, securing on its outer circumference an output gear forming part of the speed reduction mechanism and supported rotationally but axially immovably relative to the housing by a pair of supporting bearings mounted on the housing, and the screw shaft being coaxially integrated with the driving shaft, formed on its outer circumference with a helical screw groove corresponding to the helical screw groove of the nut, adapted to be inserted into the nut via a large number of balls, and supported not rotationally but axially movably relative to the housing characterized in that the output gear is secured on the outer circumference of the nut with being sandwiched by an inner ring of one supporting bearing and a flange portion of the nut, and that the output gear comprises teeth formed on the outer circumference of the gear and a central hole formed at the center of the gear; an intermediate region between a peripheral portion near the teeth and a boss near the central hole formed to have a thickness thinner than those of the peripheral portion and the boss; a plurality of weight-lightening apertures, which has a configuration of rectangle expanding radially outward, formed circumferentially and equidistantly in the intermediate region; and a vibration absorbing member of synthetic rubber formed on both side surfaces of the intermediate region integrally each other through the weight-lightening apertures, the vibration absorbing member is attached to the radially outer side than the outer diameter of a bearing to be arranged adjacent to the vibration absorbing member.

### Embodiment

One preferable embodiment of the present invention will be hereinafter described with reference to the drawings.

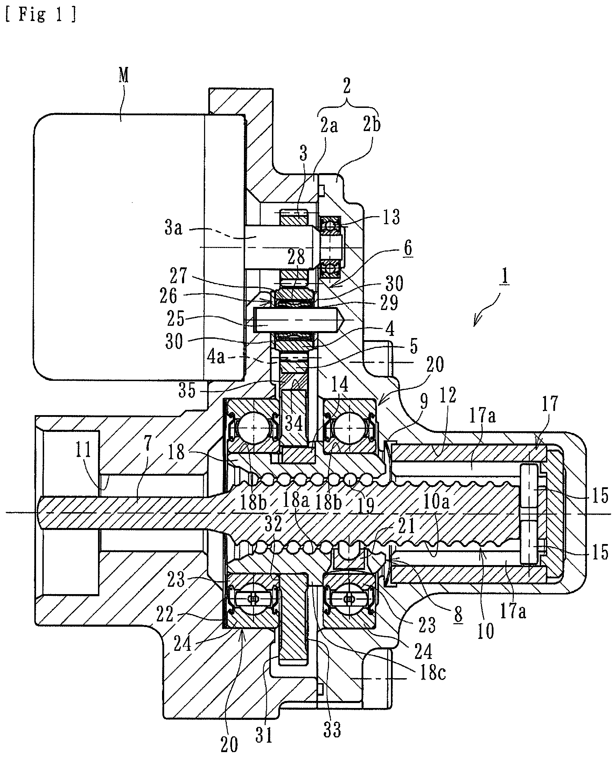

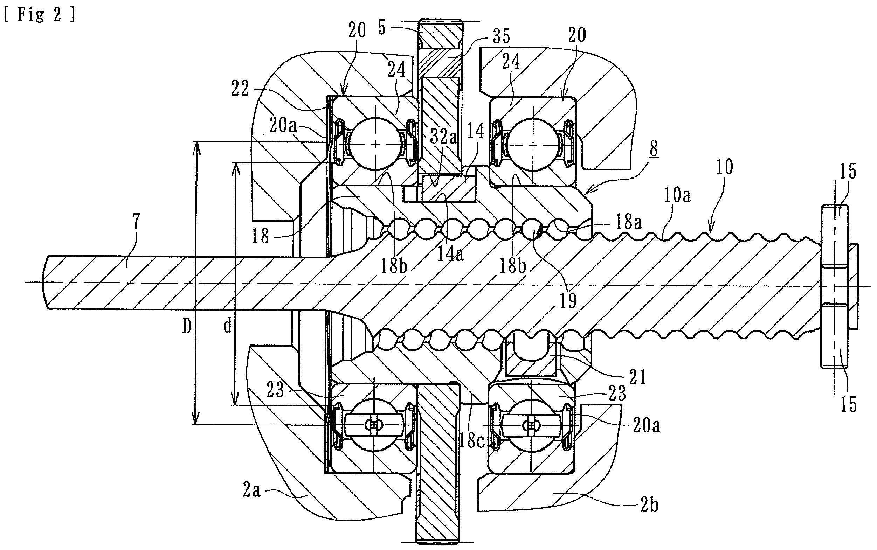

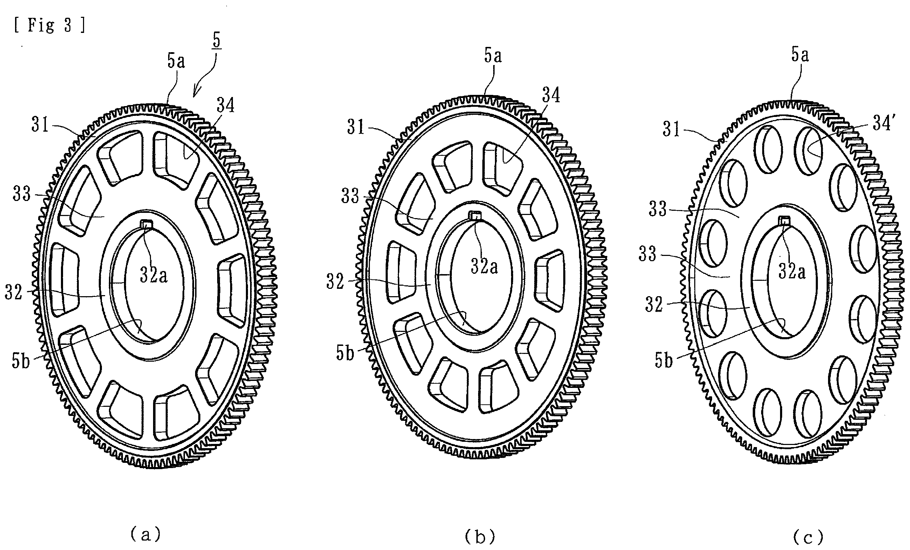

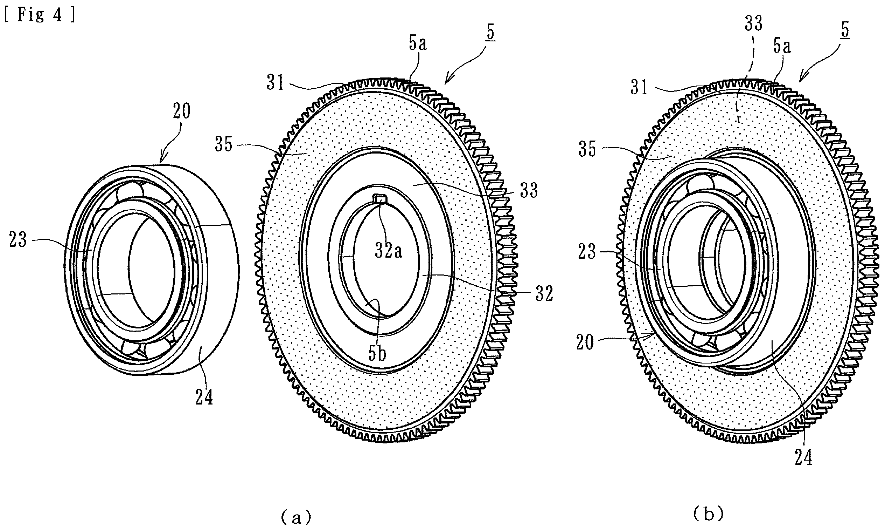

Fig. 1 is a longitudinal section view showing one preferable embodiment of an electric actuator of the present invention, Fig. 2 is an enlarged longitudinal section view showing the ball screw mechanism of Fig. 1, Fig. 3(a) is a perspective view showing a configuration of weight-lightening apertures of an output gear of the present invention, Fig. 3(b) is a perspective view showing a comparative example of the configuration of weight-lightening apertures of an output gear of the present invention, Fig. 3(c) is a perspective view showing another comparative example of the configuration of weight-lightening apertures of an output gear of the present invention, Fig. 4(a) is an explanatory view showing a relative arrangement between an output gear and its supporting bearing, and Fig. 4(b) is a perspective view showing a mounted state between an output gear and its supporting bearing.

As shown in Fig. 1, the electric actuator 1 of the present invention comprises a cylindrical housing 2; an electric motor M mounted on the housing 2; a speed reduction mechanism 6 including an input spur gear 3 secured on a motor shaft 3a of the electric motor M, an intermediate gear 4 mating with the input gear 3, and an output gear 5 mating with the intermediate gear 4 and mounted on the outer circumference of a nut 18 described later more in detail; and a ball screw mechanism 8 for converting rotational motion of the electric motor M to axial linear motion of a driving shaft 7 via the speed reduction mechanism 6.

The housing 2 is formed of aluminum alloy such as A 6063 TE, ADC 12 etc. by die casting and comprises a first housing 2a on which the electric motor M is mounted and a second housing 2b abutted on and bolted to an end face of the first housing 2a by fastening bolts (not shown). The first housing 2a and the second housing 2b are formed with a through bore 11 and a blind bore 12 respectively for containing the screw shaft 10 as described later.

The input gear 3 is press-fitted onto the end of the motor shaft 3a of the electric motor M so as not to be relatively rotated and rotationally supported by a rolling bearing 13 comprising a deep groove ball bearing mounted on the second housing 2b. The output gear 5 mating with the intermediate spur gear 4 is integrally secured on the nut 18 forming part of the ball screw mechanism 8 via a key 14.

The driving shaft 7 is integrally formed with a screw shaft 10 forming part of the ball screw mechanism 8 and guide pins 15,15 are mounted on one end (right-side end in Fig. 1) of the driving shaft 7. A sleeve 17 is fitted in the blind bore 12 of the second housing 2b. Axially extending recessed grooves 17a, 17a are formed on the inner circumference of the sleeve17 by grinding. The recessed grooves 17a, 17a are circumferentially oppositely arranged and the guide pins 15,15 engage them to support the screw shaft 10 axially movably but not rotationally. Falling-out of the sleeve 17 can be prevented by a stopper ring 9 mounted on an opening of the blind bore 12 of the second housing 2b.

The sleeve 17 is formed of sintered alloy by an injection molding machine for molding plastically prepared metallic powder. In this injection molding, metallic powder and binder comprising plastics and wax are firstly mixed and kneaded by a mixing and kneading machine to form pellets from the mixed and kneaded material. The pellets are fed to a hopper of the injection molding machine and then pushed into dies under a heated and melted state and finally formed to the sleeve by a so-called MIM (Metal Injection Molding) method. The MIM method can easily mold sintered alloy material to article having desirable accurate configurations and dimensions although the article require high manufacturing technology and have configurations hard to form.

On the other hand, the guide pins 15 are formed of high carbon chromium bearing steel such as SUJ 2 or carburized bearing steel such as SCr 435 and their surfaces are formed with carbonitrided layer having carbon content more than 0.80 % by weight and hardness more than HRC 58. In this case it is possible to adopt needle rollers used in needle bearings as guide pins 15. This makes it possible to have the guide pins 15 having hardness more than HRC 58 and being excellent in anti-wear property, availability and manufacturing cost.

As shown in the enlarged view of Fig. 2, the ball screw mechanism 8 comprises the screw shaft 10 and the nut 18 inserted on the screw shaft 10 via balls 19. The screw shaft 10 is formed on its outer circumference with a helical screw groove 10a and supported axially movably but not rotationally. On the other hand, the nut 18 is formed on its inner circumference with screw groove 18a corresponding to the screw groove 10a of the screw shaft 10 and a plurality of balls 19 are rollably contained between the screw grooves 10a, 18a. The nut 18 is supported by two supporting bearings 20, 20 rotationally but axially immovably relative to the housings 2a, 2b. A numeral 21 denotes a bridge member for achieving an endless circulating passage of balls 19 through the screw groove 18a of the nut 18.

The cross-sectional configuration of each screw groove 10a, 18a may be either one of circular-arc or Gothic-arc configuration. However, the Gothic-arc configuration is adopted in this embodiment since it can have a large contacting angle with the ball 19 and set a small axial gap. This enables to have large rigidity against the axial load and thus to suppress generation of vibration.

The nut 18 is formed of case hardened steel such as SCM 415 or SCM 420 and its surface is hardened to HRC 55 to 62 by vacuum carburizing hardening. This enables to omit treatments such as buffing for scale removal after heat treatment and thus to reduce the manufacturing cost. On the other hand, the screw shaft 10 is formed of medium carbon steel such as S55C or case hardened steel such as SCM 415 or SCM 420 and its surface is hardened to HRC 55 to 62 by induction hardening or carburizing hardening.

The output gear 5 forming part of the speed reduction mechanism 6 is firmly secured on the outer circumference 18b of the nut 18 via a key 14 and the support bearings 20, 20 are press-fitted onto the nut 18 via a predetermined interference at both sides of the output gear 5. More particularly, as shown in Fig. 2, the output gear 5 is secured on the nut 18 by the key 14 fitted in a rectangular space formed by a key way 14a formed on an outer circumference 18b of the nut 18 and a key way 32a formed on an inner circumference of the output gear 5 under a condition in which the output gear 5 is sandwiched by an inner ring 23 of the supporting bearing 20 arranged at the side of the first housing 2a and a flange portion 18c of the nut 18. On the other hand, the supporting bearing 20 arranged at the side of the second housing 2b is secured on the outer circumference 18b of the nut 18 under a condition in which it is sandwiched by the flange portion 18c of the nut 18 and the second housing 2b. This enables to prevent both the supporting bearings 20, 20 and output gear 5 from being axially shifted even though strong thrust load would be applied to them from the driving shaft 7. Each supporting bearing 20 comprises a deep groove ball bearing on both sides of which is mounted shield plates 20a, 20a for preventing lubricating grease sealed within the bearing body from being leaked outside and abrasive debris from being entered into the bearing body from outside.

In the present embodiment, since both the supporting bearings 20, 20 are formed by deep groove ball bearing having the same specifications, it is possible to support both a thrust load applied from the driving shaft 7 and a radial load applied from the output gear 5 and also to simplify confirmation work to prevent errors during assembly of the bearing and thus to improve the assembling operability. In this case, the term "same specifications" means that the deep groove ball bearings have the same inner diameters, outer diameters, width dimensions, rolling element sizes, rolling element numbers and internal clearances.

The pair of supporting bearings 20, 20 are fitted into the first and second housings 2a, 2b via radial clearance and one support bearing 20 of these paired bearings 20, 20 is mounted on the first housing 2a via a washer 22 comprising a ring-shaped elastic member.

The washer 22 is a wave washer press-formed of austenitic stainless steel (JIS SUS 304 etc.) or preserved cold rolled steel sheet (JIS SPCC etc.) having high strength and wear resistance and an inner diameter D of the washer 22 is larger than an outer diameter d of the inner ring 23 of the supporting bearing 20 to urge the supporting bearing 20 toward the adjacent output gear 5. This makes it possible to eliminate axial play of the pair of supporting bearings 20, 20 and thus to obtain smooth rotation of the nut 18. In addition, since the washer 22 contacts only the outer ring 24 of the supporting bearing 20 and does not contact the rotational inner ring 23, it is possible to prevent the inner ring 23 of the supporting bearing 20 from contacting the housing 2a even if the nut 18 is urged toward the housing 2a by reverse-thrust load which would be often caused and thus to prevent the nut 18 from being locked by increase of frictional force.

Returning to Fig. 1 again, a gear shaft 25 of the intermediate gear 4 forming part of the speed reduction mechanism 6 is fitted in the first and second housings 2a, 2b and the intermediate gear 4 is rotationally supported on the gear shaft 25 via a rolling bearing 26. When press-fitting one end (e.g. first housing 2a-side end) of the gear shaft 25 into the first housing 2a, it is possible to allow assembling misalignment and thus to obtain smooth rotational performance by performing the clearance fitting of the other end (e.g. second housing 2b-side end). The rolling bearing 26 is formed from a needle roller bearing of a so-called shell type. It includes an outer ring 27 and a plurality of needle rollers 29. The outer ring 27 is press-formed from steel sheet and press-fit into an inner circumference of the intermediate gear 4. The plurality of needle rollers 29 are rollably contained in the outer ring 27 via a cage 28. This enables the adoption of easily or readily available bearings or a standard design and thus reduces manufacturing cost.

Ring-shaped washers 30, 30 are installed on both sides of the intermediate gear 4 to prevent direct contact of the intermediate gear 4 against the first and second housings 2a, 2b. In this embodiment, the face width of the teeth 4a of the intermediate gear 4 is formed smaller than an axial width of the gear blank. This makes it possible to reduce contact area between the intermediate gear 4 and the washers 30, 30 and thus their frictional resistance and to obtain smooth rotational performance. The washers 30 are flat washers press-formed of austenitic stainless steel sheet or preserved cold rolled steel sheet having high strength and frictional resistance. Alternatively, the washers 30 may be formed of brass, sintered metal or thermoplastic synthetic resin such as PA (polyamide) 66 in which a predetermined amount of fiber reinforcing material such as GF (glass fibers) is impregnated.

The output gear 5 is formed of sintered alloy and comprises spur teeth 5a on its circumference and a central hole 5b e.g. circular hole adapted to be fitted on the outer circumference 18b of the nut 18 as shown in Fig. 3(a). An intermediate region 33 between a peripheral portion 31 near the teeth 5a and a boss 32 near the central hole 5b is formed to have a thickness thinner than those of the peripheral portion 31 and the boss 32 and a plurality of weight-lightening apertures 34 are formed equidistantly along a circumference in the intermediate region 33. Each weight-lightening aperture 34 has a configuration of rectangle expanding radially outward. A key way 32a engaging with said securing key 14 is formed on the inner circumference of the boss 32. Although it is illustrated rectangular weight-lightening apertures 34 which are effective for reducing the weight of the gear, the shape of each aperture 34 is not limited to a rectangle and any other shape e.g. an egg-shape or a triangle having a configuration expanding toward radially outward may be possible if the weight-lightening apertures 34 can reduce the weight of the output gear 5 while keeping the strength and rigidity thereof.

Metallic powder for the sintering alloy comprises completely alloyed powder (atomized iron powder of alloyed and melted steel where alloyed components are uniformly distributed in grains) or partially alloyed powder (alloyed powder where partially alloyed powder is adhered to pure iron powder) of Fe, Mo and Ni. More particularly, one example of the alloyed powders is hybrid type alloyed powder (trade name JIP 21 SX of JFE steel Co., Japan) in which pre-alloy copper powder comprising Fe of 2% by weight, Ni of 1% by weight and Mo is adhered to fine Ni powder, Cu powder and graphite powder via binder. This hybrid type alloyed powder is able to obtain high mechanical strength (tensioning strength and hardness) due to increase of martensite phase ratio to the metallic structure of sintered body with increasing the cooling speed (higher than 50°C/min) after sintering. This eliminates heat treatment after sintering and thus provides an output gear of high accuracy. It is preferable Mo of 0.5 to 1.5% by weight in order to improve the hardenability and Ni of 2 to 4% by weight is added in order to improve the toughness of a sintered body. Similarly to the sleeve 17 described above, the output gear 5 may be formed of sintered alloy by the MIM method with preparing the metallic powder plastically.

According to the present embodiment, the weight-lightening apertures 34 of the output gear 5 are arranged at a position near the outer circumference of the intermediate region 33 as shown in Fig. 3(a). This makes it possible to reduce the moment of inertia, which is proportional to the square of the radius of the output gear 5, and also to improve the strength and durability of the gear than a case in which the weight-lightening apertures 34 are arranged at a position near the boss 32 in the intermediate region 33 as shown in Fig. 3(b). This arrangement further contributes to weight reduction as compared with the case where circular weight-lightening apertures 34' are provided as shown in Fig. 3(c).

According to the present embodiment, a vibration absorbing member 35 is integrally adhered by vulcanized adhesion to the thin walled intermediate region 33 so that synthetic rubber of both sides of the intermediate region 33 is connected each other through the weight-lightening apertures 34 as shown in Fig. 4. The vibration absorbing member 35 is formed of synthetic rubber such as NBR (acrylonitrile-butadiene rubber) and adhered to the intermediate region 33 in a radially outer region than the outer diameter of the outer ring 24 of an adjacent supporting bearing 20 as shown in Fig. 4(a). In addition, the side surfaces of the vibration absorbing member 35 are configured so that they are substantially flush with those of the peripheral portion 31 and the boss 32. This makes it easy to form the vibration absorbing member 35 and to assure the desired dimensional accuracy. In addition, since the vibration absorbing member 35 is connected to both sides of the intermediate region 33 through the weight-lightening apertures 34, it is possible to improve the reliability with preventing peeling-off or dropout of the vibration absorbing member 35 and to suppress generation of abnormal noise such as tooth hitting sound with reducing vibration of teeth and simultaneously reducing the weight of the gear 5 and thus to ensure smooth rotation of the gear 5 with preventing contact of the gear 5 with the outer ring 24 of the bearing 20 as shown in Fig. 4(b). In this specification, the term "substantially flush" means only target values in design and thus errors caused by machining should be naturally allowed.

There are examples of material of the vibration absorbing member 35, other than previously mentioned NBR, e.g. HNBR (hydrogenation acrylonitric-butadiene rubber) superior in heat resistance, EPM, EPDM, ACM (poly-acrylic rubber) and FKM (fluororubber) superior in heat and chemical resistance.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The gear of the present invention can be used to an output gear of an electric actuator provided with a ball screw mechanism for converting a rotational input motion from an electric motor to a linear motion of a driving shaft via a gear reduction mechanism e.g. of electric motors for a general industry use or driving parts of an automobile etc.

### Description of Reference numerals

- 1: electric actuator
- 2: housing
- 2a: first housing
- 2b: second housing
- 3: input gear
- 3a: motor shaft
- 4: intermediate gear
- 5: output gear
- 5a: teeth of output gear
- 5b: central hole
- 6: speed reduction mechanism
- 7: driving shaft
- 8: ball screw mechanism
- 9: stopper ring
- 10: screw shaft
- 10a, 18a: screw groove
- 11: through bore
- 12: blind bore
- 13, 26: rolling bearing
- 14: key
- 14a, 32a: key way
- 15: engaging pin
- 17: sleeve
- 17a: recessed groove
- 18: nut
- 18b: outer circumference of nut
- 18c: flange of nut
- 19: ball
- 20: supporting bearing
- 20a: shield plate
- 21: bridge member
- 22, 30: washer
- 23: inner ring of supporting bearing
- 24, 27: outer ring of supporting bearing
- 25: gear shaft of intermediate gear
- 28: cage of rolling bearing
- 29: needle roller of rolling bearing
- 31: peripheral portion near teeth
- 32: boss near central hole
- 33: intermediate region
- 34, 34': weight-lightening aperture
- 35: vibration absorbing member
- 51: electric actuator
- 52: housing
- 52a: first housing
- 52b: second housing
- 53: electric motor
- 53a: motor shaft
- 54: input gear
- 55: intermediate gear
- 56: output gear
- 56a: boss
- 57: speed reduction mechanism
- 58: ball screw mechanism
- 59: driving shaft
- 60: screw shaft
- 60a, 61a: screw groove
- 61: nut
- 61b: outer circumference of nut
- 62: ball
- 63a: through bore
- 63b: blind bore
- 64: gear shaft
- 65: bush
- 66: supporting bearing
- 67: inner ring
- 68: outer ring
- 69: low noise gear
- 70: body portion
- 71: tooth portion
- 72: metallic gear
- 73: vibration absorbing member
- 74a, 74b: recessed portion
- 74c: communication portion
- M: electric motor

## Claims

1. A gear (5) comprising teeth (5a) formed on the outer circumference of the gear (5) and a central hole (5b) formed at the center of the gear (5); an intermediate region (33) between a peripheral portion (31) near the teeth (5a) and a boss (32) near the central hole (5b) formed to have a thickness thinner than those of the peripheral portion (31) and the boss (32); a plurality of weight-lightening apertures (34) formed circumferentially and equidistantly in the intermediate region (33); and a vibration absorbing member (35) of synthetic rubber formed on both side surfaces of the intermediate region (33) integrally each other through the weight-lightening apertures (34), the vibration absorbing member (35) is attached to the radially outer side than an outer diameter of a bearing to be arranged adjacent to the vibration absorbing member (35).

2. The gear (5) of claim 1 wherein the weight-lightening apertures (34) are arranged at a position near the outer circumference of the intermediate region (33).

3. The gear (5) of claim 1 wherein each weight-lightening aperture (34) has a configuration of rectangle or triangle expanding radially outward.

4. The gear (5) of claim 1 wherein the side surfaces of the vibration absorbing member (35) are configured so that they are flush with those of the peripheral portion (31) and the boss (32).

5. The gear (5) of claim 1 wherein the gear is formed of sintered alloy.

6. An electric actuator comprising:
a housing (2);
an electric motor (M) mounted on the housing (2);
a speed reduction mechanism (6) for transmitting rotational force of the motor (M) to a ball screw mechanism (8) via a motor shaft (3a); and
the ball screw mechanism (8) being able to convert the rotational motion of the electric motor (M) to the axial linear motion of a driving shaft (7) via the speed reduction mechanism (6) and comprising a nut (18) and a screw shaft (10); the nut (18) being formed with a helical screw groove (18a) on its inner circumference, securing on its outer circumference (18b) an output gear (5) forming part of the speed reduction mechanism (6) and supported rotationally but axially immovably relative to the housing (2) by a pair of supporting bearings (20, 20) mounted on the housing (2), and the screw shaft (10) being formed on its outer circumference with a helical screw groove (10a) corresponding to the helical screw groove (18a) of the nut (18), adapted to be inserted into the nut (18) via a large number of balls (19), and supported not rotationally but axially movably relative to the housing (2) **characterized in**:
**that** the output gear (5) is secured on the outer circumference (18b) of the nut (18) with being sandwiched by an inner ring (23) of one supporting bearing (20) and a flange portion (18c) of the nut (18), and
**that** the output gear (5) is configured by a gear (5) defined in any one of claims 1 to 5.
